Europäisches Patentamt

European Patent Office

Office européen des brevets

(11) Publication number: **0 070 184**
**B1**

## (12) EUROPEAN PATENT SPECIFICATION

(45) Date of publication of patent specification: **11.01.89**

(21) Application number: **82303654.6**

(22) Date of filing: **13.07.82**

(51) Int. Cl.⁴: **G 06 F 11/10**

(54) **A method of testing memory.**

(30) Priority: **13.07.81 JP 109073/81**

(43) Date of publication of application:
**19.01.83 Bulletin 83/03**

(45) Publication of the grant of the patent:
**11.01.89 Bulletin 89/02**

(84) Designated Contracting States:
**DE FR GB**

(56) References cited:
**EP-A-0 023 821**
**DE-A-3 003 150**
**GB-A-2 016 758**

(73) Proprietor: **FANUC LTD**
**3580, Shibokusa Aza-Komanba Oshino-mura**
**Minamitsuru-gun Yamanashi 401-05 (JP)**

(72) Inventor: **Kagawa, Yoshimasa**
**1994-227, Hazama-cho**
**Hachioji-shi Tokyo (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a method for testing a memory, which can enhance the reliability of data stored in the memory.

In devices of which high degrees of reliability are required, information read out from a memory is usually checked by the parity check method or the like in order to prevent erroneous information from being read out of the memory due to, for example, any fault of the memory element and leading to the malfunction of the device.

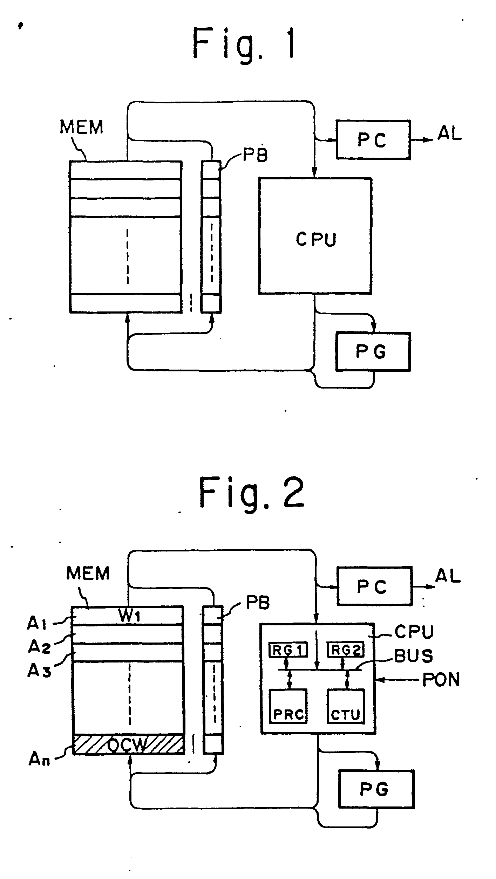

Figure 1 is a block diagram for explaining a prior-art method of testing a memory on the basis of the parity check method. In the Figure, CPU denotes a data processing unit, PG a parity bit generator, MEM a memory for storing data, PB a memory for storing parity bits, and PC a parity check circuit. In this method of testing a memory, the parity bit generator PG and the parity check circuit PC are disposed on the side of the processor CPU in advance. In writing data into the memory MEM, a predetermined parity bit is generated by the parity bit generator PG for every word to be stored in the memory MEM, and it is stored in the parity bit storing memory PB. In reading out data from the memory MEM, the parity check is performed by the parity check circuit PC. More specifically, when data is to be written from the processor CPU into the memory MEM, the parity bit generator PG produces a parity bit from the data to-be-written in accordance with the rule of the odd or even parity check, and it writes the parity bit into the same address of the parity bit storing memory PB as the address of the memory MEM to store the data. On the other hand, when the processor CPU has apointed a certain address of the memory MEM and has read data stored in the address, the parity bit of the data is checked by the parity check circuit PC. If an error is detected, an alarm AL is issued to inform an operator of the error, and the processor is interrupted from operating by well-known means.

The even parity signifies a method in which the parity bit is produced from the data of one word and is added to the data so that the number of bits of logic "1" in the one-word data may become even. That is, when the number of logic "1" in the data is odd, the parity bit becomes "1", and when the number of logic "1" is even, the parity bit becomes "0". Each parity bit thus produced is added to the data. On the other hand, the odd parity signifies a method in which the parity bit is produced from the data of one word and is added to the data so that the number of bits of logic "1" in the one-word data may become odd. That is, when the number of logic "1' in the data is odd, the parity bit becomes "0", and when the number of logic "1" is even, the parity bit becomes "1". Each parity bit thus produced is added to the data.

In a numerical control device, a command program is stored in the data storing memory MEM. In a memory operation mode, NC data is read out from the data storing memory every block, and numerical control processing is performed with them. Such data storing memory MEM is constructed of a so-called nonvolatile memory device which holds its stored contents even when a power supply has been turned off. For example, a random access memory (RAM) which is backed up by a battery. In some cases, however, the parity bit storing memory PB, however, cannot be constructed of the battery backed-up RAM on account of such factors as cost. More specifically, the word length of the NC data used in an NC device or the like is 8 bits, and most battery backed-up RAM devices generally used have an 8-bit arrangement (8 bits×$n$ words). There is no suitable battery backed-up RAM device having a 1-bit arrangement (1 bit×$n$ words). In other words, no RAM of a 1-bit arrangement, which operates quickly and which consumes little power while the power supply is cut off, is available. In order to back up the parity bit storing memory PB with a battery, therefore, the RAM device of the 8-bit arrangement is inevitably used, resulting in the disadvantages that a memory capacity corresponding to the surplus 7×$n$ bits is wasteful and that the cost becomes high. For the above reasons, a volatile memory which is inexpensive is used as the parity bit storing memory PB.

Accordingly, when the power supply has been cut off, the contents of the parity bit storing memory PB are lost. Therefore, in the first operation of reading out data after the power supply has been turned on again, the parity check cannot be carried out, and it cannot be determined whether or not the data storing memory MEM is properly executing a memory oepration.

EP—A—0 023 821 discloses the memory testing procedure described hereinbefore with reference to Figure 1, and also discloses a separate memory testing procedure not involving parity bits, comprising a check data preparation step of preparing an operational control word which, in combination with other data words in the nonvolatile memory, will produce data of a predetermined value, and writing the operational control word into a specified area of the nonvolatile memory. A subsequent memory check comprises reading out the data words in the nonvolatile memory in succession and operating on the successively read data words, including the operational control word, and examining whether or not the result of the operation is said data of a predetermined value.

The present invention is claimed in claim 1 combines these two memory testing procedures successively in a novel and inventive way.

According to the present invention there is provided a method of testing a nonvolatile data memory comprising producing a parity bit from a data word to be written in the nonvolatile memory and writing the data word into the nonvolatile memory and the corresponding parity bit into a volatile parity bit memory, and a checking step of subsequently reading out the data word from the nonvolatile memory and the parity bit from the volatile memory and then performing a parity check when the data word is to be used, characterized in that the memory testing method comprises, in combination with the preceding steps: a check data preparation step of preparing an operational control word which, in combination with the other data words in the nonvolatile memory, will produce data of a predetermined value, and writing the operational control word into a specified area of said nonvolatile memory; and a subsequent memory check comprising initially clearing the parity bit volatile memory, then a parity bit reproduction step of reading out the data words retained in said nonvolatile memory in succession, producing parity bits from the read data words and rewriting said data words into said nonvolatile memory and said parity bits into said volatile memory, and operating on the successively read data words, including the operational control word, and examining whether or not the result of the operation is said data of a predetermined value.

An example and embodiment of the present invention may provide a method of testing a memory which can decide whether or not the data storing memory is properly operating particularly but not exclusively after a power supply has been turned on again.

An example and embodiment of the present invention may provide a method of testing a memory which can test the memory operation of the data storing memory after a power supply has been turned on again, even when a volatile memory is used as a parity bit storing memory.

An example and embodiment of the present invention may provide a method of testing a memory which can readily test the memory operation of the data storing memory particularly but not exclusively after a power supply has been turned on again.

Features and advantages of an embodiment and example of the invention will be apparent from the following description taken on connection wiht the accompanying drawings, in which:

Figure 1 is a block diagram for explaining a prior-art memory testing method based on the parity check, while Figure 2 is a block diagram showing an embodiment of the present invention.

Hereunder, the embodiment of the present invention will be described in detail with reference to the drawings.

Figure 2 is a block diagram for explaining a memory testing method of the present invention, in which the same parts as in Figure 1 are assigned the same symbols.

In the Figure, symbol OCW indicates an operational control word, which is stored in a specified area $A_n$ of the data storing memory MEM. The operational control word OCW is calculated when writing data into the data storing memory MEM, so that the summation of the data stored in the memory MEM with the data OCW included may become all-zero when overflow is neglected. PRC indicates a processor, CPU a control unit, and $RG_1$

and $RG_2$ first and second registers. These are interconnected by an address data bus BUS. Further, the data storing memory MEM, the parity bit storing memory PB and the parity bit generator PG are connected.

In the present embodiment, immediately after the reintroduction of power from the power supply after a previous cut-off of the power in which the memory PB was cleared, the check of a memory operation to be described below is performed, and a parity bit is produced and written into the parity bit storing memory PB. Before the power supply was cut off, the operational control word OCW was stored in the part $A_n$ of the data storing memory MEM. The operational control word OCW is calculated by the processor PRC so that, by way of example, the summation of all the words (including the operational control word) stored in the data storing memory MEM may become all-zero when overflow is neglected. The data items thus calculated are stored in the specified area $A_n$, being a part of the data storing memory MEM, before the power supply is cut off.

① When the power supply is turned on again, the control unit CTU senses the event. Under the control of the control unit CTU, the processor PRC reads out first data $W_1$ from address $A_1$ of the data storing memory MEM and sets it in the first register $RG_1$. Subsequently, it sends the data through the bus BUS to the parity bit generator PG, in which the parity bit is produced. This parity bit is written into the parity bit storing memory PB. ② in parallel with the above, the processor PRC adds the data $W_1$, read from the memory MEM and written into the first register $RG_1$, to the content (zero) of the second register $RG_2$ having an initial value of zero and stores the result of the operation in the second register $RG_2$ through the bus BUS. ③ Further, the read data $W_1$ in the first register $RG_1$ is written into the original address $A_1$ of the data storing memory MEM again.

④ There after, the i-th (i=2, 3...) data $W_i$ (i=2, 3...) is successively read out from addresses $A_i$ (i=2, 3...), the parity bits are produced by the parity bit generator PG, and these parity bits are written into the parity bit storing memory PB. In parallel therewith, the read data $W_i$ is written into the first register $RG_1$ built in the processor PRC, the data is thereafter added to the contents

$$\sum_{j=1}^{i-1} W_j$$

of the second register $RG_2$, and the results of the operation $\sum W_i$ are stored into the second register $RG_2$. Further, the read i-th data $W_i$ is written into the original addresses $A_i$ of the data storing memory MEM again.

⑤ After the above processing has been performed for all the data including the operational control word OCW stored in the specified area of the data storing memory MEM in advance, the processor PRC checks whether the content

$$\sum_{i}^{n} W_i$$

of the second register $RG_2$ built in the processor is all-zero.

When the aforementioned content is all-zero, it is decided that the data storing memory MEM is performing a normal memory operation. When the aforementioned content is non-zero, it is decided that the content of the data storing memory MEM after the introduction of the power supply differs from the content before the cut off of the power supply. Then, subsequent processing is stopped, and the abnormality of the memory operation is reported by providing the alarm AL. The control data OCW described before is obtained as the difference between the all-zero and the added result of all the data of the data storing memory MEM except the control data OCW.

When the data storing memory MEM is executing normal memory operation, the data stored in this memory is thereafter read out and supplied for NC (numerical control) in succession. In this case, the conventional parity check is carried out for every word by the parity check circuit PC by use of the parity bit which has been produced in the first operation of reading out data after the introduction of power from the power supply and stored in the parity bit storing memory PB.

As set forth above, according to the present embodiment, the operational control word is included in the non-volatile data storing memory in advance, and after the introduction of power from the power supply, the sum of the respective data stored in the data storing memory is evaluated so as to decide whether or not this sum is equal to the predetermined value, whereby even when the parity bit storing memory is volatile, the memory check after the introduction of power can be performed. In addition, in parallel with the memory check processing after the introduction of power, the parity bit of each block of data is produced and stored. In the second or subsequent operation of reading out data, therefore, the parity check can be performed for every block of data by the use of this parity bit, so that a precise memory check is possible.

In general terms, there has been disclosed a method of testing a memory (MEM) wherein a parity bit is produced from data to-be-written, the data is written into the nonvolatile memory (MEM) and the parity bit into a volatile memory (PB), and in case of reading out the data and the parity bit from both the memories (MEM, PB) and performing the parity check in order to utilize the stored data, even when the parity bit has disappeared due to cutoff of a power supply, the data in the nonvolatile memory (MEM) can be checked after the turn-on of the power supply. This method of testing the memory checks the data by calculating all the data written in the nonvolatile memory (MEM) to prepare check data (OCW) and writing the prepared check data (OCW) into a specified area $(A_n)$ of the nonvolatile memory (MEM) in advance and by reading out the data from the nonvolatile memory (MEM) in succession after the turn-on of the power supply so as to prepare a parity bit again and operating on the successively read data so as to determine if the result of the operation becomes specified data.

The present invention is not restricted to the foregoing embodiment. For example, the method of producing the operational control word data has been explained as to the case where the sum is set so as to become a predetermined value, e.g., zero. However, the present invention is not restricted thereto. There are various methods available, including a method according to which the control data is so set that exclusive ORs corresponding to the bits of the respective data become specified values. Besides, although a case has been explained where the operational control word data is produced and stored before the cut-off of power, it is also possible, when data stored in the data storing memory is not altered, to calculate and store operational control word data only once in writing the data to-be-stored from an external storage medium into the memory. Further, although the embodiment has been explained as performing the memory check upon sensing the introduction of power, a button may be separately disposed so as to perform the check by depressing the button.

**Claims**

1. A method of testing a nonvolatile data memory (MEM) comprising producing a parity bit from a data word to be written in the nonvolatile memory (MEM) and writing the data word into the nonvolatile memory (MEM) and the corresponding parity bit into a volatile parity bit memory (PB), and a checking step of subsequently reading out the data word from the nonvolatile memory (MEM) and the parity bit from the volatile memory (PB) and then performing a parity check when the data word is to be used, characterized in that the memory testing method comprises, in combination with the preceding steps; a check data preparation step of preparing an operational control word (OCW) which, in combination with the other data words in the nonvolatile memory (MEM), will produce data of a predetermined value, and writing the operational control word (OCW) into a specified area of said nonvolatile memory (MEM); and a subsequent memory check comprising initially clearing the parity bit volatile memory (PB), then a parity bit reproduction step of reading out the data words retained in said nonvolatile memory (MEM) in succession, producing parity bits from the read data words and rewriting said data words into said nonvolatile memory (MEM) and said parity bits into said volatile memory (PB), and operating on the successively read data words, including the operational control word (OCW), and examining whether or not the result of the operation is said data of a predetermined value.

2. A method according to claim 1, wherein the step of clearing the parity bit volatile memory (PB) occurs on cut-off of power from a power supply.

3. A method according to claim 1 or 2, wherein the parity bit reproduction step and the operating on the successively read data words occurs after introduction of power from a power supply.

4. A method according to any preceding claim, whrein the operational control word (OCW) is prepared such as to produce all-zero when combined with the other data words in the nonvolatile memory (MEM).

## Patentansprüche

1. Verfähren zum Prüfen eines nichtflüchtigen Datenspeichers (MEM), enthaltend ein Erzeugen eines Paritätsbits aus einem in den nichtflüchtigen Speicher (MEM) einzuschreibenden Datenwort und ein Einschreiben des Datenworts in den nichtflächtigen Speicher (MEM) und des korrespondierenden Paritätsbits in einen flüchtigen Paritätsbitspeicher (PB) sowie einen Prüfschritt zum Prüfen eines nachfolgenden Auslesens des Datenworts aus dem nichtflüchtigen Speicher (MEM) und des Paritätsbits aus dem flüchtigen Speicher (PB) und daran anschließend zum Ausführen einer Paritätsprüfung, wenn das Datenwort zu benutzen ist, dadurch gekennzeichnet, daß das Speicherprüfverfahren in Kombination mit den vorhergehenden Schritten umfaßt:

einen Prüfdatenvorbereitungsschritt zum Vorbereiten eines Operationssteuerworts (OCW), das in Kombination mit den anderen Datenwörtern in dem nichtflüchtigen Speicher (MEM) Daten eines vorbestimmten Werts erzeugen wird, und Einschreiben des Operationssteuerworts (OCW) in einen spezifizierten Bereich des nichtflüchtigen Speichers (MEM),

eine nachfolgende Speicherprüfung, die ein anfängliches Löschen des flüchtigen Paritätsbitspeichers (PB), dann einen Paritätsbit-Wiedergebeschritt zum Auslesen der Datenwörter nacheinander, die in dem nichtflüchtigen Speicher (MEM) gehalten wurden, ein Erzeugen von Paritätsbits aus den ausgelesenen Datenwörtern und ein Wiedereinschreiben der Datenwörter in den nichtflüchtigen Speicher (MEM) und der Paritätsbits in den flüchtigen Speicher (PB) sowie ein Einwirken auf die aufeinanderfolgend ausgelesenen Datenwörter, die das Operationssteuerwort (OCW) enthalten, und

ein Prüfen, ob das Ergebnis der Operation die Daten eines vorbestimmten Wertes sind oder nicht.

2. Verfahren nach Anspruch 1, bei dem der Schritt zum Löschen des flüchtigen Paritätsbitspeichers (PB) auf das Ausschalten der Stromversorgung aus einer Stromversorgungseinrichtung hin erfolgt.

3. Verfahren nach Anspruch 1 oder 2, bei der Paritätsbit-Wiedergebeschritt und das Einwirken auf die aufeinanderfolgend ausgelesenen Datenwörter nach dem Zuführen von Energie aus der Stromversorgungseinrichtung erfolgt.

4. Verfahren nach einem der vorhergehenden Ansprüche, bei dem das Operationssteuerwort (OCW) vorbereitet wird, um Nurnull-Daten zu erzeugen, wenn es mit den anderen Datenwörtern in dem nichtflüchtigen Speicher (MEM) kombiniert wird.

## Revendications

1. Une méthode de vérification de mémoire de données permanente (MEM) comprenant la production d'un bit de partié à partir d'un mot de données à écrire dans la mémoire permanente (MEM) et l'écriture du mot de données dans la mémoire permanente (MEM) et du bit de parité correspondant dans une mémoire de bit de parité non permanente (PB), et une étape de contrôle de la sortie ultérieure du mot de données de la mémoire permanente (MEM) et du bit de parité de la mémoire non permanente (PB), et ensuite l'exécution d'un contrôle de partié quand le mot de données doit être utilisé, caractérisée en ce que la méthode de vérification de mémoire comprend en combinaison avec les étapes précédentes: une étape de préparation de données de contrôle pour préparer un mot de command opérationnel (OCW) qui, en combinaison avec les autres mots de données dans la mémoire permanente (MEM), produiront des données d'une valeure prédéterminée, et l'écriture du mot de commande opéationnel (OCW) dans un secteur spécifié de ladite mémoire-permanente (MEM); et un contrôle de mémoire ultérieur comprenant d'abord une remise à zéro de la mémoire non permanente du bit de parité (PB), puis une étape de reproduction du bit de parité pour sortic les mots de données retenus dans ladite mémoire permanente (MEM) successivement, en produisant des bits de parité à partir des mots de données lus et en récrivant lesdits mots de données dans ladite mémoire permanente (MEM) et lesdits bits de parité dans ladite mémoire non permanente (PB), et en opérant sur les mots de données successivement lus, incluant le mot de commande opérationnel (OCW), et en examinant si le résultat de l'opération est ou non identique auxdites données d'une valeur prédéterminée.

2. Une méthode selon la revendication 1, dans laquelle l'étape de remise à zéro de la mémoire non permanente de bit de parité (PB) suivant à la coupure de courant d'une source d'alimentation.

3. Une méthode selon la revendication 1 ou 2, dans laquelle l'étape de reproduction du bit de parité et l'opération sur les mots de données successivement lus se produisent après l'établissement du courant d'une source d'alimentation.

4. Une méthode selon l'une quelcoqnue des revendications précédentes, dans laquelle le mot de commande opérationnelle (OCW) est préparé de façon à produire du tout à zéro quand il est combiné avec les autres mots de données dans lu mémoire permanente (MEM).

# Fig. 1

# Fig. 2

1